# EUROPÄISCHE PATENTSCHRIFT

(11) **EP 1 065 409 B1**
(45) Veröffentlichungstag und Bekanntmachung des Hinweises auf die Patenterteilung: **01.04.2009**
(21) Anmeldenummer: 00111042.8
(22) Anmeldetag: 31.05.2000
(51) Int. Cl.: F16H 37/08

(54) **Stufenloses Getriebe**
Continuously variable transmission
Transmission à variation continue

(30) Priorität: 30.06.1999 DE 19930013
(43) Veröffentlichungstag der Anmeldung: 03.01.2001
(73) Patentinhaber: Volkswagen Aktiengesellschaft, 38436 Wolfsburg (DE)
(72) Erfinder: Müller, Frank, 38165 Essenrode (DE)

(56) Entgegenhaltungen:
- EP-A2- 0 308 078
- EP-A2- 0 733 829
- DE-A1- 1 625 030
- DE-A1- 1 944 070
- DE-A1- 3 703 246
- DE-A1- 19 530 623
- DE-A1- 19 728 610
- DE-A1- 19 750 166
- FR-A- 2 493 947
- US-A- 3 479 908

## Beschreibung

Die vorliegende Erfindung betrifft ganz allgemein ein stufenloses Getriebe, und insbesondere ein stufenloses Getriebe für ein Kraftfahrzeug gemäß dem Oberbegriff des Patentanspruchs 1.

Solche stufenlose Getriebe sind bekannt und beispielsweise in der gattungsgemäßen DE-OS 197 28 610 beschrieben. Dort ist ein stufenloses Getriebe offenbart, welches mit zwei Fahrbereichen bzw. Kraftflußbereichen versehen ist, wobei einerseits der Kraftfluß über einen Variator, einen mechanischen Leistungszweig und ein Summierungsgetriebe erfolgt, sowie andererseits der mechanische Leistungszweig offen ist und der gesamte Kraftfluß über den Variator erfolgt. Durch zwei Kupplungen können diese beiden Fahrbereiche geschaltet werden. Zusätzlich sind eingangsseitig am Getriebe zwei weitere Kupplungen vorgesehen, die für die Vorwärts- und Rückwärtsfahrtschaltung eingesetzt werden. Diese beiden zusätzlichen Kupplungen dienen als Anfahrkupplungen und als Reversiereinheit.

Ein solches bekanntes stufenloses Getriebe ist demnach mit einer Vielzahl von Wellen und vier Kupplungen ausgestattet, so daß eine kompakte Bauweise des Getriebes nicht möglich ist. Bei einem landwirtschaftlich genutzten Fahrzeug, wofür das stufenlose Getriebe nach der oben genannten DE-OS 197 28 610 konzipiert ist, spielt der Bauraum eine nur untergeordnete Rolle.

Als stufenloses Getriebe für einen PKW ist das bekannte Getriebe nicht ohne weiteres einsetzbar. Zudem ist der Wirkungsgrad des bekannten Getriebes infolge der zahlreichen Wellen und Zahnräder sowie der vier Kupplungen nicht hoch genug.

Demzufolge ist es die Aufgabe der vorliegenden Erfindung, ein gattungsgemäßes stufenloses Getriebe derart weiterzubilden, daß eine möglichst kompakte Bauweise des Getriebes erreichbar ist und daß der Wirkungsgrad verbessert wird.

Diese Aufgabe wird durch ein stufenloses Getriebe gelöst, welches die Merkmale gemäß dem kennzeichnenden Teil des Patentanspruchs 1 aufweist.

Demnach weist ein erfindungsgemäßes stufenloses Getriebe zwei Kraftflußbereiche auf, wobei der erste Kraftflußbereich im wesentlichen über einen Variator und einen Planetensatz sowie parallel dazu über eine Vorstufe, eine erste Kupplung und den Planetensatz erfolgt, während der zweite Kraftflußbereich nur über den Variator und eine zweite Kupplung erfolgt, wobei im ersten, Kraftflußbereich die erste Kupplung geschlossen ist und die zweite Kupplung geöffnet ist, während im zweiten Kraftflußbereich die erste Kupplung geöffnet ist und die zweite Kupplung geschlossen ist, wobei das stufenlose Getriebe über vier Wellen verfügt, die so angeordnet sind, daß zwischen der ersten Zwischenwelle und der zweiten Zwischenwelle die Eingangswelle angeordnet ist, so daß diese drei Wellen im wesentlichen in einer Ebene liegen, und daß die dritte Zwischenwelle neben dieser Ebene liegend angeordnet ist.

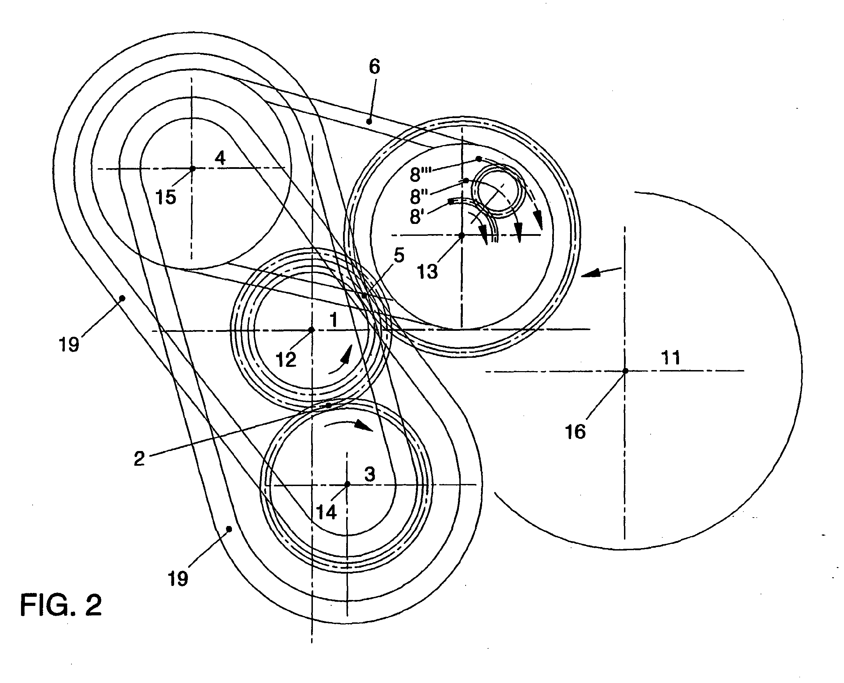

Mit dieser Anordnung läßt sich ein sehr kompaktes stufenloses Getriebe bauen, bei dem die Wellen gleichsam ineinander verschachtelt angeordnet sind. Die äußere Anordnungsform (im Querschnitt wie nach der Figur 2 zu sehen) der vier Wellen ist nahezu in Gestalt eines gleichschenkeligen Dreiecks ausgeführt, wobei drei Wellen an den Ecken dieses Dreiecks angeordnet sind und die vierte Welle im inneren des Dreiecks angeordnet ist.

Vorzugsweise ist der Variator als Umschlingungsgetriebe oder als Reibradgetriebe ausgebildet, wobei die Ausmaße des Variators im wesentlichen die Ausmaße des Getriebes bestimmen.

Weitere vorteilhafte Weiterbildungen des erfindungsgemäßen stufenlosen Getriebes sind der Gegenstand von Unteransprüchen.

Die vorliegende Erfindung wird im folgenden anhand einer bevorzugten Ausführungsform erläutert werden, wobei in den Figuren folgendes dargestellt ist:
- Fig. 1: zeigt schematisch ein erfindungsgemäßes stufenloses Getriebe;
- Fig. 2: zeigt einen Querschnitt durch einen Teil des Getriebes nach der Fig. 1; und
- Fig. 3: zeigt einen aufgeklappten Querschnitt durch ein stufenloses Getriebe nach den Figuren 1 und 2.

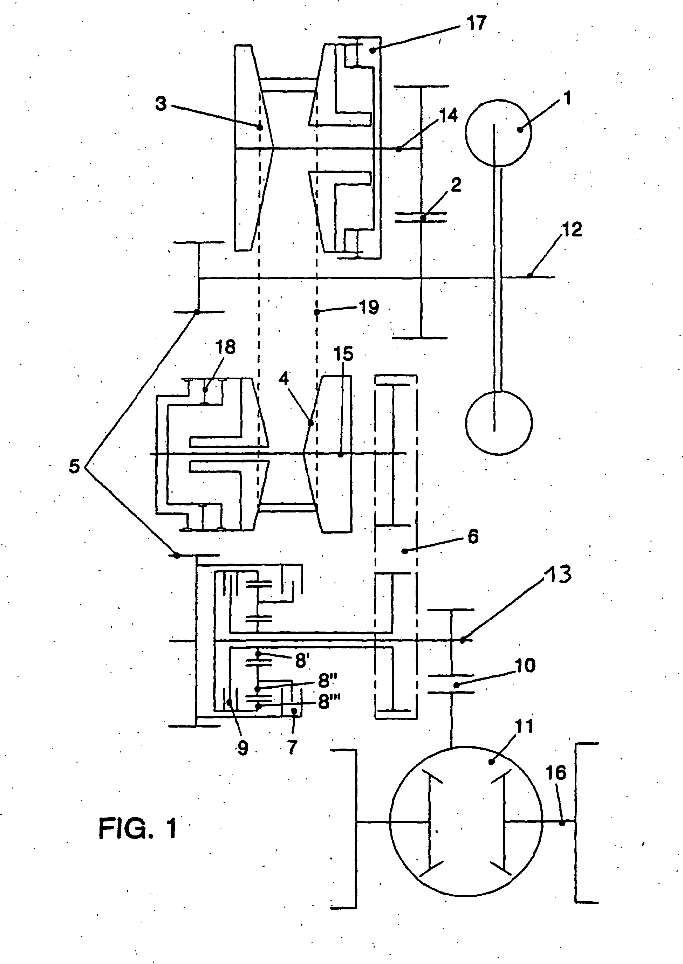

In der Figur 1 ist das stufenlose Getriebe schematisch gezeigt, wobei eine Eingangswelle 12 mit einem nicht dargestellten Motor verbunden ist. An der Eingangswelle 12 ist ein Dämpfer 1 vorgesehen, der die Drehzahlschwankungen der Eingangswelle 12 vergleichmäßigt, die infolge von zum Beispiel einem unrunden Lauf des Motors erzeugt werden.

An der Eingangswelle 12 sind zwei Vorstufen 2 und 5 vorgesehen, wobei die erste Vorstufe 2 eine Stirnradverzahnung ist, die eine triebliche Verbindung zu einer ersten Zwischenwelle 14 herstellt. An dieser ersten Zwischenwelle 14 ist der erste Scheibensatz 3 eines Variators angeordnet. Die zweite Vorstufe 5 ist auch als Stirnradverzahnung ausgeführt und stellt eine triebliche Verbindung zu einer dritten Zwischenwelle 13 bzw. zu einem Steg 8'' eines Planetensatzes 8 her, der sich an der dritten Zwischenwelle 13 befindet.

Der erste Scheibensatz 3 des Variators, der in der gezeigten Ausführungsform als Umschlingungsgetriebe dargestellt ist, ist über einen ersten Stellzylinder 17 verstellbar. Über eine Schubgliederkette 19 (in der Fig. 1 gestrichelt dargestellt) ist eine triebliche Verbindung zu dem zweiten Scheibensatz 4 des Variators hergestellt.

Der zweite Scheibensatz 4 des Variators ist auf einer zweiten Zwischenwelle 15 angeordnet, wobei der zweite Scheibensatz 4 des Variators über einen zweiten Stellzylinder 18 verstellbar ist. In der Figur 2 sind die beiden Extrempositionen der beiden Scheibensätze 3 und 4 des Variators dargestellt, wobei die Schubgliederkette 19 durchgezogen dargestellt ist.

An der zweiten Zwischenwelle 15 ist eine Kettenstufe 6 vorgesehen, die zwischen dem zweiten Scheibensatz 4 des Variators bzw. der zweiten Zwischenwelle 15 und der dritten Zwischenwelle 13 die triebliche Verbindung herstellt. Diese Kettenstufe 6 könnte auch durch eine Zahnradstufe ersetzt werden.

Zu der dritten Zwischenwelle 13 stellt einerseits die zweite Vorstufe 5 über eine erste Kupplung 7 und den Steg 8'' des Planetensatzes 8 eine triebliche Verbindung her, sowie andererseits die Kettenstufe 6 über eine zweite Kupplung 9 die triebliche Verbindung herstellen kann.

Abtriebsseitig ist an der dritten Zwischenwelle 13 eine Achsstufe 10 vorgesehen, die über eine Stirnradverzahnung eine triebliche Verbindung zu einer Abtriebswelle 16 und einem Ausgleichsdifferential 11 schafft.

Der erste Kraftflußbereich weist eine Leistungsverzweigung auf, wobei der Kraftfluß zum einen über die Eingangswelle 12, die erste Vorstufe 2, den Variator 3, 4 auf den beiden Zwischenwellen 14, 15, die Kettenstufe 6, und eine Sonne 8' des Planetensatzes 8 auf der dritten Zwischenwelle 13 erfolgt, während der Kraftfluß zum anderen über die Eingangswelle 12, die zweite Vorstufe 5, die erste geschlossene Kupplung 7, und den Steg 8'' sowie ein Ringrad 8''' des Planetensatzes 8 auf der dritten Zwischenwelle 13 erfolgt.

Je nach Übersetzung des Variators 3 und 4 ist das Getriebe in Vorwärts- bzw. Rückwärtsfahrtschaltung. Besonders vorteilhaft ist es, wenn bei der Variatorübersetzung i_{low} der Planetensatz 8 als Block umläuft.

Der zweite Kraftflußbereich verläuft nur über die Eingangswelle 12, die erste Vorstufe 2, den Variator 3, 4 auf den beiden Zwischenwellen 14, 15, die Kettenstufe 6, und die geschlossene Kupplung 9 auf der dritten Zwischenwelle 13.

Im ersten Kraftflußbereich ist der Wirkgrad des erfindungsgemäßen Getriebes sehr gut, da eine mechanische Verbindung über die zweite Vorstufe 5 und die zweite Kupplung 9 vorliegt.

Über die beiden Vorstufen 2 und 5 läßt sich das Getriebe einfach an Benzin- oder Dieselmotoren anpassen, da im Falle eines Dieselmotors höhere Drehmomente weiterzuleiten sind. Im Hauptfahrbereich, im zweiten Kraftflußbereich kann der Variator mit einer Spreizung von maximal 4 gefahren werden, so daß bei heutzutage eingesetzten Variatoren mit einer maximalen Spreizung von 6, der Variator 3, 4 nicht am Limit benutzt wird, wodurch dessen Wirkungsgrad besser ist.

Das erfindungsgemäße Getriebe benötigt keine vorgeschalteten Kupplungen, so daß der Aufbau einfacher und damit kompakter erfolgen kann. Die Reversierschaltung wird ausschließlich durch die Übersetzung des Variators 3 und 4 in Zusammenwirken mit dem Planetensatz 8 realisiert.

Wie es aus der Figur 2 zu ersehen ist, sind die vier Wellen 12, 13, 14 und 15 des vorliegenden stufenlosen Getriebes sehr nahe beieinander angeordnet, so daß eine sehr kompakte Bauweise des Getriebes möglich ist.

Die vier Wellen 12, 13, 14 und 15 liegen innerhalb eines Dreiecks, wobei die drei Wellen 13, 14 und 15 die Ecken dieses Dreiecks darstellen und die vierte Welle, die Eingangswelle 12 innerhalb des so gebildeten Dreiecks liegt.

Anders ausgedrückt, liegen die drei Wellen 12, 14 und 15 nahezu in einer Ebene, während die vierte Welle, die dritte Zwischenwelle 13 benachbart dieser Ebene angeordnet ist.

Hierdurch läßt sich eine äußerst kompakte Anordnung des Getriebes erreichen.

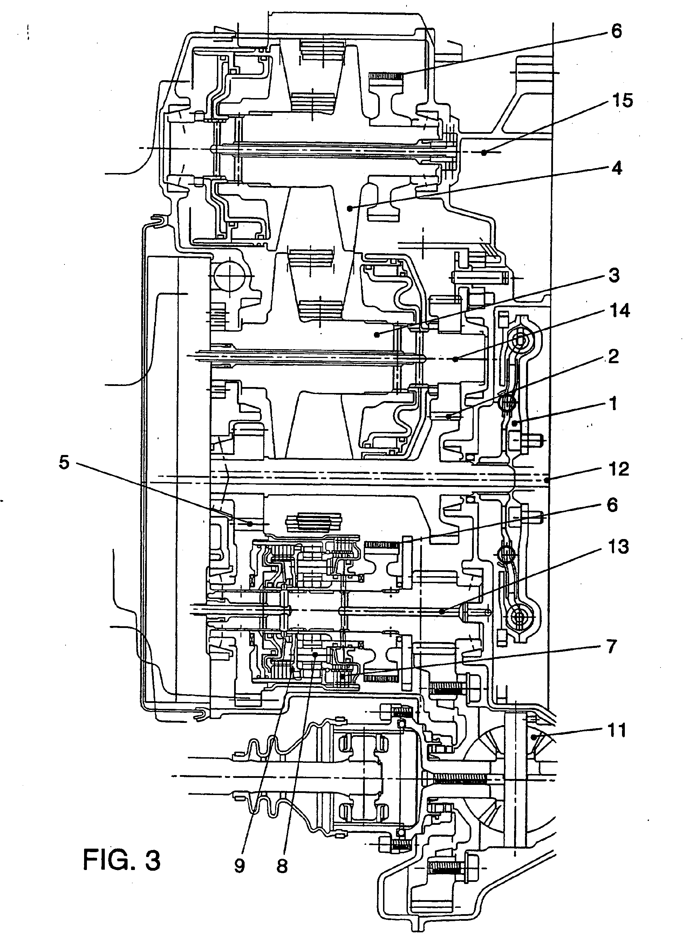

In der Figur 3 ist in einer aufgeklappten Darstellung im Querschnitt das erfindungsgemäße Getriebe dargestellt.

Die äußeren Abmessungen des stufenlosen Getriebes werden hauptsächlich durch die Ausmaße des Variators mit den beiden Scheibensätzen 3 und 4 bestimmt. Durch Ausnutzung des Zwischenraums zwischen den beiden Scheibensätzen 3 und 4 des Variators kann dort die Eingangswelle 12 angeordnet werden, so daß die drei beteiligten Wellen, die Eingangswelle 12, sowie die beiden Zwischenwellen 14 und 15, die die Scheibensätze 3 und 4 des Variators tragen, praktisch nahezu in Reihe liegen.

Da der Variator 3 und 4 ständig mitläuft, kann die Pumpenleistung für die Stellzylinder 17 und 18 geringer ausgelegt werden, da keine Schnellverstellung in die Anfahrstellung, zum Beispiel bei einer ABS-Bremsung nötig ist. Insofern wird der Wirkgrad ebenfalls erhöht.

Der wesentliche Vorteil des erfindungsgemäßen stufenlosen Getriebes ist die kurze Baulänge; zudem ist der Wirkungsgrad verbessert. Infolge der beiden Vorstufen 2 und 5 lassen sich durch Übersetzung in das Schnelle auch hohe Drehmomente bewältigen.

### BEZUGSZEICHENLISTE

- 1: Dämpfer
- 2: Erste Vorstufe
- 3: Variator/1. Scheibensatz
- 4: Variator/2. Scheibensatz
- 5: Zweite Vorstufe
- 6: Kettenstufe
- 7: Erste Kupplung
- 8: Planetensatz
- 8': Sonnenrad
- 8'': Steg
- 8''': Ringrad
- 9: Zweite Kupplung
- 10: Achsstufe
- 11: Ausgleichsdifferential
- 12: Eingangswelle
- 13: Dritte Zwischenwelle
- 14: Erste Zwischenwelle
- 15: Zweite Zwischenwelle
- 16: Abtriebswelle
- 17: Erster Stellzylinder
- 18: Zweiter Stellzylinder
- 19: Schubgliederkette

## Patentansprüche

1. Stufenloses Getriebe, mit:
zwei Kraftflussbereichen, wobei der erste Kraftflussbereich im wesentlichen über einen Variator (3, 4) und einen Planetensatz (8) sowie parallel dazu über eine Vorstufe (5), eine erste Kupplung (7) und den Planetensatz (8) erfolgt, während der zweite Kraftflussbereich über den Variator (3, 4) und eine zweite Kupplung (9) erfolgt, wobei im ersten Kraftflussbereich die erste Kupplung (7) geschlossen ist und die zweite Kupplung (9) geöffnet ist, während im zweiten Kraftflussbereich die erste Kupplung (7) geöffnet ist und die zweite Kupplung (9) geschlossen ist,
**dadurch gekennzeichnet, dass** das stufenlose Getriebe über eine Eingangswelle (12), eine erste Zwischenwelle (14), eine zweite Zwischenwelle (15) sowie eine dritte Zwischenwelle (13) verfügt, wobei die drei zwischenwellen (13, 14, 15) die Ecken eines Dreieckes darstellen und die Eingangswelle (12) innerhalb des so gebildeten Dreieckes liegt.

2. Stufenloses Getriebe nach Anspruch 1, **dadurch gekennzeichnet, dass** der erste Kraftflussbereich eine Leistungsverzweigung aufweist, wobei der Kraftfluss zum einen über die Eingangswelle (12), eine erste Vorstufe (2), den Variator (3, 4) auf der ersten und zweiten Zwischenwelle (14, 15), eine Kette (6), und eine Sonne (8') des Planetensatzes (8) auf der dritten Zwischenwelle (13) erfolgt, während der Kraftfluss zum anderen über die Eingangswelle (12), eine zweite Vorstufe (5), die erste geschlossene Kupplung (7), und einen Steg (8") und ein Ringrad (8''') des Planetensatzes (8) auf der dritten Zwischenwelle (13) erfolgt.

3. Stufenloses Getriebe nach Anspruch 1, **dadurch gekennzeichnet, dass** der erste Kraftflussbereich eine Leistungsverzweigung aufweist, wobei der Kraftfluss zum einen über die Eingangswelle (12), eine erste Vorstufe (2), den Variator (3, 4) auf der ersten und zweiten Zwischenwelle (14, 15), ein Zahnradstufe, und eine Sonne (8') des Planetensatzes (8) auf der dritten Zwischenwelle (13) erfolgt, während der Kraftfluss zum anderen über die Eingangswelle (12), eine zweite Vorstufe (5), die erste geschlossene Kupplung (7), und einen Steg (8") und ein Ringrad (8''') des Planetensatzes (8) auf der dritten Zwischenwelle (13) erfolgt.

4. Stufenloses Getriebe nach Anspruch 2, **dadurch gekennzeichnet, dass** der zweite Kraftflussbereich über die Eingangswelle (12), die erste Vorstufe (2), den Variator (3, 4) auf der ersten und zweiten Zwischenwelle (14, 15), die Kette (6), und die geschlossene Kupplung (9) auf der dritten Zwischenwelle (13) erfolgt.

5. Stufenloses Getriebe nach einem der Ansprüche 2 oder 3, **dadurch gekennzeichnet, dass** der zweite Kraftflussbereich über die Eingangswelle (12), die erste Vorstufe (2), den Variator (3, 4) auf der ersten und zweiten Zwischenwelle (14, 15), eine Zahnradstufe, und die geschlossene Kupplung (9) auf der dritten Zwischenwelle (13) erfolgt.

6. Stufenloses Getriebe nach einem der Ansprüche 2 bis 5, **dadurch gekennzeichnet, dass** auf der Eingangswelle (12) vor der ersten Vorstufe (2) ein Dämpfer (1) angeordnet ist.

7. Stufenloses Getriebe nach einem der Ansprüche 1 bis 6, **dadurch gekennzeichnet, dass** der Abtrieb von der dritten Zwischenwelle (13) über eine Achsstufe (10) auf eine Abtriebswelle (16) erfolgt, wobei an der Abtriebswelle (16) ein Ausgleichsdifferential (11) angeordnet ist.

8. Stufenloses Getriebe nach einem der Ansprüche 2 bis 7, **dadurch gekennzeichnet, dass** die erste Vorstufe (2) einen Eingriff zwischen der Eingangswelle (12) und der ersten Zwischenwelle (14) herstellt.

9. Stufenloses Getriebe nach einem der Ansprüche 3 bis 8, **dadurch gekennzeichnet, dass** die zweite Vorstufe (5) einen Eingriff zwischen der Eingangswelle (12) und der dritten Zwischenwelle (13) herstellt.

10. Stufenloses Getriebe nach einem der Ansprüche 2 bis 9, **dadurch gekennzeichnet, dass** die Kette (6) bzw. die Zahnradstufe einen Eingriff zwischen der zweiten Zwischenwelle (15) und der dritten Zwischenwelle (13) herstellt.

11. Stufenloses Getriebe nach einem der Ansprüche 3 bis 10, **dadurch gekennzeichnet, dass** die erste Kupplung (7) eine triebliche Verbindung zwischen der zweiten Vorstufe (5) und dem Steg (8") des Planetensatzes (8) herstellt.

12. Stufenloses Getriebe nach einem der Ansprüche 1 bis 11, **dadurch gekennzeichnet, dass** die zweite Kupplung (9) eine triebliche Verbindung zwischen einem Ausgang des Variators (4) und der dritten Zwischenwelle (13) herstellt.

13. Stufenloses Getriebe nach einem der Ansprüche 1 bis 12, **dadurch gekennzeichnet, dass** je nach Übersetzung des Variators (3, 4) des Getriebe für Vorwärts- oder Rückwärtsfahrt geschaltet ist.

14. Stufenloses Getriebe nach einem der Ansprüche 1 bis 13, **dadurch gekennzeichnet, dass** bei einer Übersetzung des Variators (3, 4) der Planetensatz (8) als Einheit um die dritte Zwischenwelle (13) umläuft.

15. Stufenloses Getriebe nach einem der Ansprüche 1 bis 14, **dadurch gekennzeichnet, dass** die Spreizung des Variators (3, 4) maximal 4 beträgt.

16. Stufenloses Getriebe nach einem der Ansprüche 1 bis 15, **dadurch gekennzeichnet, dass** der Variator (3, 4) als Umschlingungsgetriebe oder als Reibradgetriebe ausgebildet ist.

## Claims

1. Continuously variable transmission, having:
two force flow ranges, with the first force flow range taking place substantially via a variator (3, 4) and a planetary gear set (8) and, parallel thereto, via a pilot stage (5), a first clutch (8) and the planetary gear set (8), while the second force flow range takes place via the variator (3, 4) and a second clutch (9), with the first clutch (7) being closed and the second clutch (9) being open in the first force flow range, while the first clutch (7) is open and the second clutch (9) is closed in the second force flow range,
**characterized in that** the continuously variable transmission has an input shaft (12), a first intermediate shaft (14), a second intermediate shaft (15) and a third intermediate shaft (13), with the three intermediate shafts (13, 14, 15) forming the corners of a triangle and with the input shaft (12) being arranged within the triangle formed in this way.

2. Continuously variable transmission according to Claim 1, **characterized in that** the first force flow range has a power split, with the force flow taking place on the one hand via the input shaft (12), a first pilot stage (2), the variator (3, 4) on the first and second intermediate shafts (14, 15), a chain (6) and a sun gear (8') of the planetary gear set (8) on the third intermediate shaft (13), while the force flow takes place on the other hand via the input shaft (12), a second pilot stage (5), the first closed clutch (7) and a web (8'') and a ring gear (8''') of the planetary gear set (8) on the third intermediate shaft (13).

3. Continuously variable transmission according to Claim 1, **characterized in that** the first force flow range has a power split, with the force flow taking place on the one hand via the input shaft (12), a first pilot stage (2), the variator (3, 4) on the first and second intermediate shafts (14, 15), a gearwheel stage and a sun gear (8') of the planetary gear set (8) on the third intermediate shaft (13), while the force flow takes place on the other hand via the input shaft (12), a second pilot stage (5), the first closed clutch (7) and a web (8'') and a ring gear (8''') of the planetary gear set (8) on the third intermediate shaft (13).

4. Continuously variable transmission according to Claim 2, **characterized in that** the second force flow range takes place via the input shaft (12), the first pilot stag (2), the variator (3, 4) on the first and second intermediate shafts (14, 15), the chain (6) and the closed clutch (9) on the third intermediate shaft (13).

5. Continuously variable transmission according to one of Claims 2 and 3, **characterized in that** the second force flow range takes place via the input shaft (12), the first pilot stage (2), the variator (3, 4) on the first and second intermediate shafts (14, 15), a gearwheel stage and the closed clutch (9) on the third intermediate shaft (13).

6. Continuously variable transmission according to one of Claims 2 to 5, **characterized in that** a damper (1) is arranged on the input shaft (12) upstream of the first pilot stage (2).

7. Continuously variable transmission according to one of Claims 1 to 6, **characterized in that** the drive output from the third intermediate shaft (13) takes place via an axle stage (10) to a drive output shaft (16), with a differential gearing (11) being arranged on the drive output shaft (16).

8. Continuously variable transmission according to one of Claims 2 to 7, **characterized in that** the first pilot stage (2) produces an engagement between the input shaft (12) and the first intermediate shaft (14).

9. Continuously variable transmission according to one of Claims 3 to 8, **characterized in that** the second pilot stage (5) produces an engagement between the input shaft (12) and the third intermediate shaft (13).

10. Continuously variable transmission according to one of Claims 2 to 9, **characterized in that** the chain (6) or the gearwheel stage produces an engagement between the second intermediate shaft (15) and the third intermediate shaft (13).

11. Continuously variable transmission according to one of Claims 3 to 10, **characterized in that** the first clutch (7) produces a driving connection between the second pilot stage (5) and the web (8'') of the planetary gear set (8).

12. Continuously variable transmission according to one of Claims 1 to 11, **characterized in that** the second clutch (9) produces a driving connection between an output of the variator (4) and the third intermediate shaft (13).

13. Continuously variable transmission according to one of Claims 1 to 12, **characterized in that** the transmission is set up for forward or reverse driving depending on the transmission ratio of the variator (3, 4).

14. Continuously variable transmission according to one of Claims 1 to 13, **characterized in that,** at one transmission ratio of the variator (3, 4), the planetary gear set (8) revolves as a unit around the third intermediate shaft (13).

15. Continuously variable transmission according to one of Claims 1 to 14, **characterized in that** the spread of the variator (3, 4) is a maximum of 4.

16. Continuously variable transmission according to one of Claims 1 to 15, **characterized in that** the variator (3, 4) is embodied as a wraparound transmission or as a friction gear.

## Revendications

1. Transmission à variation continue, avec:
deux zones de flux de forces, la première zone de flux de forces se produisant pour l'essentiel par l'intermédiaire d'un variateur (3, 4) et d'un engrenage planétaire (8) ainsi que parallèlement à eux via un étage préliminaire (5), un premier embrayage (7) et l'engrenage planétaire (8), tandis que la seconde zone de flux de forces se produit via le variateur (3, 4) et un second embrayage (9), le premier embrayage (7) étant fermé et le second embrayage (9) étant ouvert dans la première zone de flux de forces, tandis que dans la seconde zone de flux de forces, le premier embrayage (7) est ouvert et le second embrayage (9) est fermé,
**caractérisée en ce que** la transmission à variation continue dispose d'un arbre d'entrée (12), d'un premier arbre intermédiaire (14), d'un deuxième arbre intermédiaire (15) ainsi que d'un troisième arbre intermédiaire (13), les trois arbres intermédiaires (13, 14, 15) formant les coins d'un triangle et l'arbre d'entrée (12) étant situé à l'intérieur du triangle ainsi formé.

2. Transmission à variation continue selon la revendication 1, **caractérisée en ce que** la première zone de flux de forces comporte une ramification des forces, le flux de forces se produisant d'une part via l'arbre d'entrée (12), un premier étage préliminaire (2), le variateur (3, 4) situé sur les premier et deuxième arbres intermédiaires (14, 15), une chaîne (6), et une roue solaire (8') de l'engrenage planétaire (8) situé sur le troisième arbre intermédiaire (13), tandis que le flux de forces se produit d'autre part via l'arbre d'entrée (12), un second étage préliminaire (5), le premier embrayage (7) fermé et une entretoise (8'') et une roue annulaire (8''') de l'engrenage planétaire (8) situé sur le troisième arbre intermédiaire (13).

3. Transmission à variation continue selon la revendication 1, **caractérisée en ce que** la première zone de flux de forces comporte une ramification des forces, le flux de forces se produisant d'une part via l'arbre d'entrée (12), un premier étage préliminaire (2), le variateur (3, 4) situé sur les premier et deuxième arbres intermédiaires (14, 15), un étage de roue dentée et une roue solaire (8') de l'engrenage planétaire (8) situé sur le troisième arbre intermédiaire (13), tandis que le flux de forces se produit d'autre part via l'arbre d'entrée (12), un second étage préliminaire (5), le premier embrayage (7) fermé et une entretoise (8'') et une roue annulaire (8''') de l'engrenage planétaire (8) situé sur le troisième arbre intermédiaire (13).

4. Transmission à variation continue selon la revendication 2, **caractérisée en ce que** la seconde zone de flux de forces se produit via l'arbre d'entrée (12), le premier étage préliminaire (2), le variateur (3, 4) situé sur les premier et deuxième arbres intermédiaires (14, 15), la chaîne (6) et l'embrayage (9) fermé situé sur le troisième arbre intermédiaire (13).

5. Transmission à variation continue selon l'une quelconque des revendications 2 ou 3, **caractérisée en ce que** la seconde zone de flux de forces se produit via l'arbre d'entrée (12), le premier étage préliminaire (2), le variateur (3, 4) situé sur les premier et deuxième arbres intermédiaires (14, 15), un étage de roue dentée et l'embrayage (9) fermé situé sur le troisième arbre intermédiaire (13).

6. Transmission à variation continue selon l'une quelconque des revendications 2 à 5, **caractérisée en ce qu'**un amortisseur (1) est disposé avant le premier étage préliminaire (2) situé sur l'arbre d'entrée (12).

7. Transmission à variation continue selon l'une quelconque des revendications 1 à 6, **caractérisée en ce que** l'entraînement de sortie se produit du troisième arbre intermédiaire (13) à un arbre d'entraînement de sortie (16) via un étage d'essieu (10), un différentiel de compensation (11) étant disposé au niveau de l'arbre d'entraînement de sortie (16).

8. Transmission à variation continue selon l'une quelconque des revendications 2 à 7, **caractérisée en ce que** le premier étage préliminaire (2) produit un engrènement entre l'arbre d'entrée (12) et le premier arbre intermédiaire (14).

9. Transmission à variation continue selon l'une quelconque des revendications 3 à 8, **caractérisée en ce que** le second étage préliminaire (5) produit un engrènement entre l'arbre d'entrée (12) et le troisième arbre intermédiaire (13).

10. Transmission à variation continue selon l'une quelconque des revendications 2 à 9, **caractérisée en ce que** la chaîne (6) et/ou l'étage de roue dentée produit un engrènement entre le deuxième arbre intermédiaire (15) et le troisième arbre intermédiaire (13).

11. Transmission à variation continue selon l'une quelconque des revendications 3 à 10, **caractérisée en ce que** le premier embrayage (7) produit une jonction motrice entre le second étage préliminaire (5) et l'entretoise (8") de l'engrenage planétaire (8).

12. Transmission à variation continue selon l'une quelconque des revendications 1 à 11, **caractérisée en ce que** le second embrayage (9) produit une jonction motrice entre une sortie du variateur (4) et le troisième arbre intermédiaire (13).

13. Transmission à variation continue selon l'une quelconque des revendications 1 à 12, **caractérisée en ce que** suivant la multiplication du variateur (3, 4), la transmission est respectivement connectée pour une marche avant ou arrière.

14. Transmission à variation continue selon l'une quelconque des revendications 1 à 13, **caractérisée en ce qu'**en cas de multiplication du variateur (3, 4), l'engrenage planétaire (8) tourne d'un seul tenant autour du troisième arbre intermédiaire (13).

15. Transmission à variation continue selon l'une quelconque des revendications 1 à 14, **caractérisé en ce que** l'extension du variateur (3, 4) est au maximum de 4.

16. Transmission à variation continue selon l'une quelconque des revendications 1 à 15, **caractérisée en ce que** le variateur (3, 4) prend la forme d'un engrenage à contact ou d'un engrenage à friction.
